Europäisches Patentamt

European Patent Office

Office européen des brevets

(19)

(11) Publication number: **0 083 911**

A1

(12) **EUROPEAN PATENT APPLICATION**

(21) Application number: **82830304.0**

(22) Date of filing: **20.12.82**

(51) Int. Cl.³: **F 16 F 9/42**
**B 60 G 15/00, B 62 K 25/04**

(30) Priority: **12.01.82 IT 330382**

(43) Date of publication of application:
**20.07.83 Bulletin 83/29**

(84) Designated Contracting States:
**AT DE FR GB NL**

(71) Applicant: SEBAC INDUSTRIALE S.p.A.
Via A. Costa, 114 .
I-40067 Rastignano (Bologna)(IT)

(72) Inventor: Piazzi, Paolo
Via Valleverde 17
I-40067 Rastignano (Bologna)(IT)

(74) Representative: Lanzoni, Luciano
c/o BUGNION S.p.A. Via Farini, 37
I-40124 Bologna(IT)

(54) **Hydro-pneumatic shock absorber with separate tank for suspensions, in particular for engine powered means of transportation provided with two or three wheels.**

(57) The shock absorber is provided with a tank 10 separate there from, which an appropriate type of diaphragm divides into two parts, namely a lower part $C_1$ in which oil is contained and an upper part $C_2$ in which gas under pressure is contained, the regulation of the value of which can determine differences in the loads and characteristics of the shock absorber. The connection between the body 5 of the shock absorber containing the oil and the lower part of the said separate tank is achieved through two separate pipes, namely a supply pipe 15 and a return pipe 16, the purpose of which is to alllow the oil to circulate. The separation diaphragm 14 is virtually flat and of a large area so as to undergo minimum oscillation and consequently last longer.

FIG1

EP 0 083 911 A1

Hydro-pneumatic shock absorber with separate tank for suspensions, in particular for engine powered means of transportation provided with two or three wheels

The fundamental element utilized in a suspension, that is
to say the group of parts whose task it is to connect elastically the wheels of a vehicle to the supporting structure thereof, is certainly constituted by the shock absorber, in other words the device designed to limit and dampen oscillation phenomena that has got into the said elastic system.

Amongst the various types of shock absorbers already in
existence, reference is made in particular herein to fluid
friction shock absorbers schematically constituted by a
double cylinder and by a piston which, stressed by the impact effected, forces a fluid mass (oil) to pass through
very narrow apertures and thereby generate friction :
thus the kinetic compression energy is converted, through
friction, into heat.

Recently what are called hydro-pneumatic shock absorbers
have come on the market and these, based virtually on the
principle outlined above, are provided, inside the chamber
filled with oil, with an additional small second chamber,
separated from the former by a diaphragm, in which gas
under pressure is contained : in this way it is possible
to absorb variations in volume as a consequence of rod
oscillations and volume variations due to the thermal effect of the oil.

In order not to lessen, compatibly with the dimensions of
the shock absorber, the volume of the liquid, and consequently its characteristics and efficiency, the said second chamber has been transferred, in a later version of the said hydro-pneumatic shock absorbers, from the inside to the outside thereof, housed in a lateral end piece. This method has caused increases in the overall dimensions of the shock absorbers that are not always suited to the spaces available, and this is particularly so in the case of the more sophisticated types of engine powered means of transportation provided with two or three wheels.

On account of the foregoing, the said second chamber has recently been made separate from the body of the shock absorber, connected thereto by means of a flexible tube, so that it be possible to position the said tank wherever most suitable.

The problem with this method is that since it is mainly used on vehicles where the shock absorber undergoes heavy, troublesome stress, due to the oil contained therein being heated very greatly, the characteristics of the fluid deteriorate all of a sudden until, within a very short space of time, the shock absorber loses its efficiency completely on account of the effect the high temperature has on the viscosity of the oil and the precocious ageing of the components utilized that are not made of metal.

The cause can certainly be attributed to the high temperature that the shock absorber is not able to dissipate since the separate tank gives no help at all because of there being between it and the body of the shock absorber, an oil connection only able to absorb variations in volume, not oil circulation.

A further problem arises because of the aforementioned diaphragm generally being in the form of a closed "pudding basin" subjected to constant oscillation, in which breakage phenomena can occur.

The essential object of the invention consists, therefore, in making available a shock absorber of the hydro-pneumatic type having a separate tank for containing the chamber in which the gas is present, which maintains constant its characteristics and efficiency even in the presence of high, critical conditions of operation by virtue of the temperature of the oil being kept within limited and controlled values.

Another object consists in making available a diaphragm for separating the liquid from the gas so shaped as to reduce to a minimum the possibility of breakage point initiation and thus consequentially to increase the life span of the shock absorber.

These and other objects too are all attained with the hydro-pneumatic shock absorber according to the invention, constituted by a rod with piston able to slide guided in the inside of a corresponding cylinder filled with liquid, and provided with a separate tank divided, by means of a suitable diaphragm, into two parts, namely a lower part in which the said liquid is contained, and an upper part in which pressurized gas is contained, wherein there are two separate pipes for connecting the said lower chamber of the said tank with the said cylinder, that is to say, one pipe for supplying and one pipe for returning the said liquid, with non-return valves being placed in the said pipes so as to determine the circulation of the said liquid in one single direction.

Further characteristics and advantages of the shock absorber forming the subject of the invention will become more apparent from the detailed description that follows, illustrated purely as an unlimited example on the accompanying drawings, in which :

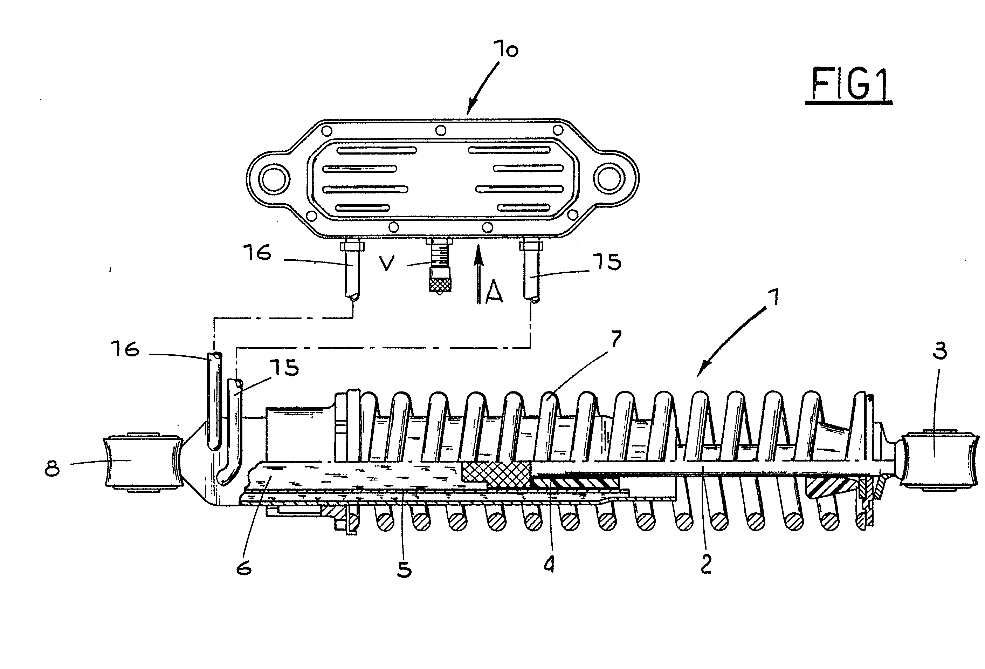

- Figure 1 shows a view of the shock absorber in question with its component parts;

- Figures 2 and 3 show, in an enlarged scale, details of the non-return valves utilized in the connection pipes;

- Figure 4 shows, in a plan view, the tank separation diaphragm;

- Figure 5 shows, in a lateral view from A in Figure 1, the tank with certain parts removed in order that others may become more apparent.

With reference to the accompanying figures, shown globally at 1 is the shock absorber element that virtually consists of a rod 2 at one extremity of which there is a first element 3 for fastening it to a movable part of the suspension, and at the other, a piston 4 that slides hermetically in the inside of a cylinder or body 5 of a known type, filled with oil 6, the passing of which through the outflow ports provided determines a damping effect on the oscillations generated by an elastic element 7 that exerts an effect between the rod and the body, the latter being connected, through a second fastening element 8, to the fixed part of the suspension (or vice versa).  At 10 is shown a tank for the oil, separate from the shock absorber 1, which is constituted (see Figure 5) by two halves of a box, 11 and 12, respectively, of shell conformation, the internal volume of which is centrally divided, in the region of the plane of symmetry, by a diaphragm 14 that acts as an element for separating the lower chamber $C_1$, filled with oil, from the upper chamber $C_2$, filled with pressurized gas.

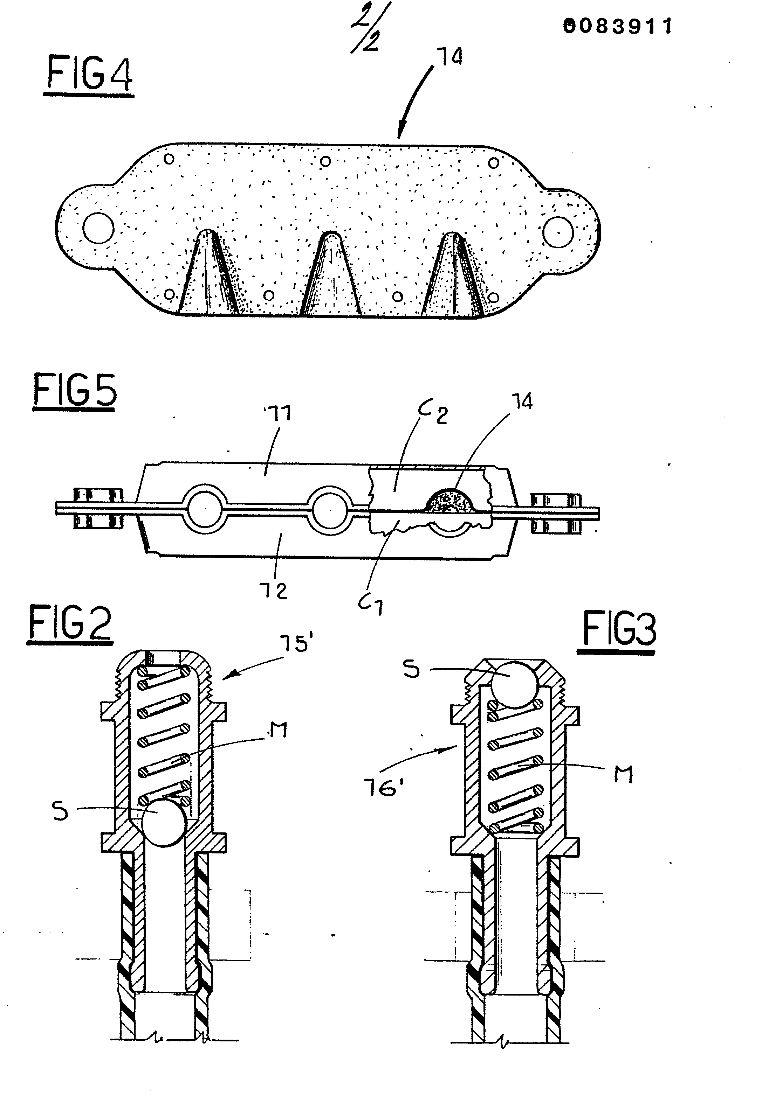

The lower chamber of the said tank 10 is then placed in communication with the body 5 of the shock absorber 1 via two separate pipes, namely a pipe 15 for supplying oil from the body of the shock absorber, and a pipe 16 for returning the oil thereto. For this to be achieved, that is to say in order that the circulation of the liquid in one single direction be possible, two non-return valves, 15' in Figure 2 and 16' in Figure 3, of a known type provided with a ball S and a spring M, are placed along the said pipes, in particular at the inlet to and at the outlet from the said tank.

As stated, the upper chamber $C_2$ is placed under pressure through the insertion of gas (generally air) therein by means of a valve V of a known type. In this connection, the diaphragm is shaped in an opportune fashion, as shown in Figure 5, so that the air intake be kept separate from the oil inlet and outlet ports.

This method thus enables the oil to circulate along the circuit formed by the said shock absorber 1, the separate tank 10, the supply pipe 15 and the return pipe 16, the said circulation being realized by the oscillations of the rod 2, that is to say through the constant "pumping" effect of the piston 4 on the oil 6 inside the body 5. Incidentally, in order that the oil arriving inside the body 5 be not sent immediately towards the outgoing pipe 15, it is good policy to place inside the said body one or more baffles, the purpose of which is to guarantee a constant (and possibly total) change of oil inside the said body. This calls for continuous cooling of the oil on the part of the tank 10 which, suitably finned, in this way acts not only as a separate oil-gas surge chamber but also as a heat elimination radiator, which is a highly important function since by keeping the oil within acceptable temperatures, the characteristics of viscosity of the oil are maintained (and thus so are the operating characteristics of the shock absorber). Likewise, the characteristics are conserved of the non-metal parts (gaskets, etcet-

era) that are liable to suddenly deteriorate at high temperatures and are thus responsible for the functions of the entire shock absorber undergoing a complete loss of efficiency.

Above all, the tank 10 maintains the surge chamber function without having necessarily to be in the vicinity of the shock absorber body.

One further observation is in respect of the particular flat shape of the diaphragm which, in virtue of the considerable area thereof, permits the diaphragm to oscillate very briefly and, above all, prevents the initiation of breakage points due to deformation concentrations.

In the practical embodiment thereof, the invention can also adopt forms that differ from that outlined above and, in particular, numerous modifications of a practical nature may be made thereto without any deviation from the framework of protection afforded to the invention.

Claims:

1. Hydro-pneumatic shock absorber with separate tank for suspensions, in particular for engine powered means of transportation provided with two or three wheels, constituted by a rod 2 with piston 4 able to slide guided in the inside of a corresponding cylinder 5 filled with liquid 6, and provided with a separate tank 10 divided, by means of a suitable diaphragm 14, into two parts, namely a lower part $C_1$ in which the said liquid is contained, and an upper part $C_2$ in which pressurized gas is contained, wherein there are two separate pipes for connecting the said lower chamber of the said tank with the said cylinder, that is to say, one pipe 15 for supplying and one pipe 16 for returning the said liquid, with non-return valves 15' and 16' being placed in the said pipes so as to determine the circulation of the said liquid in one single direction.

2. Shock absorber according to the preceding claim, wherein the said tank 10 is constituted by two halves of a box, 11 and 12, respectively, of shell conformation, the internal volume of which is centrally divided by a diaphragm 14 of flat extension that defines two chambers, namely a lower chamber $C_1$ filled with oil and an upper chamber $C_2$ filled with gas.

0083911

FIG1

0083911

FIG 4

14

FIG 5

11    C₂    14

72    C₁

FIG 2

15'

M

S

FIG 3

S

16'    M

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 061 320 (WARNER) <br> * Whole document * | 1 | F 16 F 9/42 <br> B 60 G 15/00 <br> B 62 K 25/04 |
| X | DE-C- 893 762 (ZENZ) <br> * Whole document * | 1 | |
| A | FR-A-2 258 568 (MARZOCCHI) <br> * Whole document * | 1 | |
| A | US-A-4 145 067 (CERIANI) <br> * Column 2, line 46 - column 3, line 17; figure 4 * | 1 | |
| P | EP-A-0 045 269 (MESSIER-AUTO-INDUSTRIE) <br> * Page 9, line 15 - page 10, line 5; page 15, line 32 - page 16, line 10; figures 1-4 * | 1 | TECHNICAL FIELDS SEARCHED (Int. Cl. 3) |
| A | FR-A-2 389 046 (GERARD) <br> * Page 2, lines 22-24; figures 1-6 * | 1,2 | B 62 K <br> F 16 F <br> B 60 G |
| A | FR-A-1 234 622 (ZAVODY V.I. LENINA PLZEN) <br> * Page 1, right-hand column, lines 38-42; figure 1 * | 1,2 | |
| A | GB-A- 682 110 (LEVITATION LTD.) | | |

--- -/-

The present search report has been drawn up for all claims

| Place of search | Date of completion of the search | Examiner |
|---|---|---|
| THE HAGUE | 25-04-1983 | ESPEEL R.P. |

European Patent Office

| | DOCUMENTS CONSIDERED TO BE RELEVANT | | Page 2 |
| --- | --- | --- | --- |

| Category | Citation of document with indication. where appropriate, of relevant passages | Relevant to claim | CLASSIFICATION OF THE APPLICATION (Int. Cl. ³) |
| --- | --- | --- | --- |
| A | US-A-3 527 452 (HAUSENBLAS) | | |
| | --- | | |
| A | US-A-4 156 536 (BRANDSTADTER) | | |
| | --- | | |
| A | FR-A-2 313 605 (RHEINSTAHL AG) | | |
| | ----- | | |
| | | | TECHNICAL FIELDS SEARCHED (Int. Cl. ³) |

The present search report has been drawn up for all claims

| Place of search | Date of completion of the search | Examiner |
| --- | --- | --- |
| THE HAGUE | 25-04-1983 | ESPEEL R.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E . earlier patent document, but published on, or after the filing date
D : document cited in the application
L : document cited for other reasons

& : member of the same patent family, corresponding document

EPO Form 1503 03 82